Europäisches Patentamt

**European Patent Office**

Office européen des brevets

(19)

(11) Publication number: **0 106 612**
**A1**

(12) # EUROPEAN PATENT APPLICATION

(21) Application number: **83305959.5**

(22) Date of filing: **30.09.83**

(51) Int. Cl.³: **F 04 B 35/00**
**B 60 T 17/02**

(30) Priority: **09.10.82 GB 8228919**

(43) Date of publication of application:
**25.04.84 Bulletin 84/17**

(84) Designated Contracting States:
**AT BE CH DE FR GB IT LI NL SE**

(71) Applicant: **BENDIX LIMITED**
**Douglas Road**
**Kingswood, Bristol BS15 2NL(GB)**

(72) Inventor: **Burridge, Gerald C.**
**The Smithy**
**Ston Easton Nr. Bath BA3 4QD(GB)**

(74) Representative: **Turner, Alan Reginald**
**c/o Bendix Limited Douglas Road**
**Kingswood, Bristol BS15 2NL(GB)**

(54) Improvements to compressor assemblies.

(57) The crankshaft (7) of a reciprocating piston air compressor assembly for charging the reservoirs of a vehicle air brake system is driven by an internal combustion engine through an epicyclic gear mechanism (23, 20, 12, 10) having a hand brake (22) which is normally spring applied to lock an intermediate gear (23) of the mechanism to cause driving of the crankshaft (7) by the input shaft (21) and having pneumatically operable means (58) for releasing the band brake (22) upon attainment of a desired charged pressure value of the reservoir.

FIG.1

EP 0 106 612 A1

Croydon Printing Company Ltd.

Improvements to Compressor Assemblies.          **0106612**

This invention relates to compressor assemblies and relates especially, but not exclusively, to air compressors for charging reservoirs.

In compressed air systems such as those employed for example in heavy vehicle braking systems it is usual to charge one or more reservoirs from a compressor driven by the engine of the vehicle.   In the case of more than one reservoir being charged from the same compressor, it is usual to provide protection valves whereby a. failure in the circuit of one reservoir does not prevent charging of one or more other reservoirs up to a. given pressure.

In order to interrupt the compressed air supply from the compressor when a given reservoir pressure has been attained the compressor may either be furnished with means for holding open its delivery or inlet valve. Alternatively, it may be provided with an unloader valve whereby it delivers direct to atmosphere until the pressure in one or more reservoirs have. fallen to a given level.  Such compressor unloading is usually signalled by a governor valve device responsive to reservoir pressure.  Although it will be appreciated that when unloaded in this way a compressor absorbs relative little energy from the engine which drives it, some energy is indeed wasted and.the compressor is subject to non productive wear.   In addition, when

-2-

operated off-load a piston and cylinder compressor tends to allow a certain amount of superfluous lubricant to pass into the cylinder as there is no compressor chamber pressure opposing it and this lubricant may therefore subsequently find its way into the compressed air system.

In order to reduce the aforementioned shortcomings, it is possible either to drive the compressor through an electric motor which is switched on and off by a governor to control the air supplied to the or each reservoir or, alternatively, the compressor may be driven via a clutch. In the case of an electric motor driven compressor there is the obvious disadvantage of the need for extra battery capacity and a relatively expensive electric motor and in the case of a clutch driven compressor the design of the clutch to give a reasonable working life is a critical factor.

An increasing requirement is now also presenting itself for compressor assemblies of various delivery capacities.

The present invention seeks to reduce the above shortcomings.

According to the present invention there is provided compressor assembly including a housing containing a compressor driveable through a gear train by a rotatable input shaft characterised by said gear train comprising a first gear carried by the drive shaft and being

-3-

effective to drive the compressor through a third gear by virtue of meshing interaction with an intermediate gear and control means for locking the intermediate gear in the housing to enable the input shaft to drive the compressor.

Different effective output capacities with the same crankshaft piston and cylinder assemblies are possible by changing the ratio of the gear train.

In order that the invention may be more clearly understood and readily carried into effect, the same will be further described by way of example with reference to the accompanying drawings of which

Fig. 1 illustrates in part-sectional view a part of a compressor and drive assembly in accordance with the invention,

Fig. 2 similarly illustrates and alternative embodiment and,

Fig. 3 illustrates pneumatically operable locking means for use in the mechanism of Fig. 1 or Fig. 2.

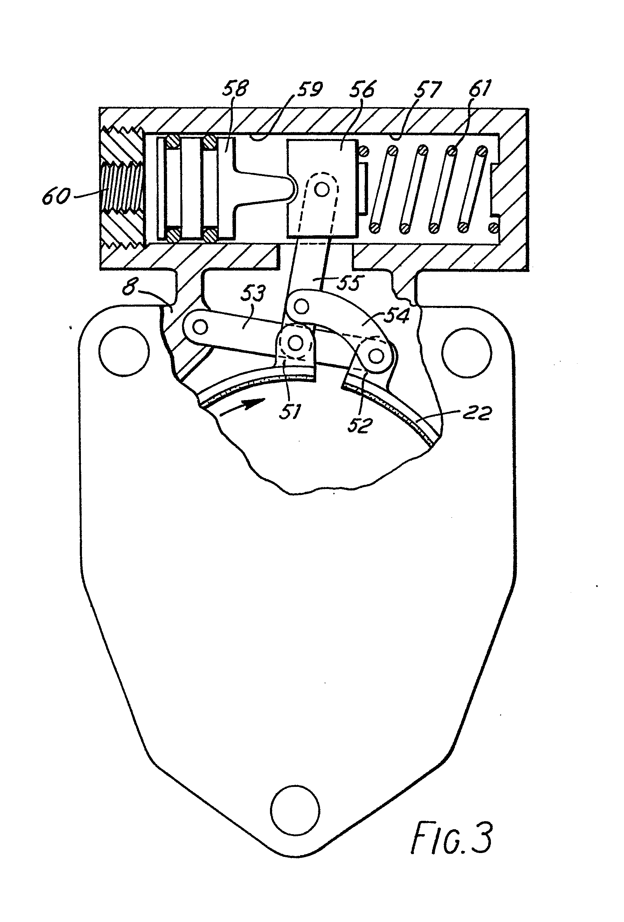

Referring to the drawing an air compressor has a crankcase 1 with a first outer main bearing plate 2 housing a main crankshaft ball-bearing 3, a second main crankshaft ball-bearing 4 being provided in the drive side of the crankcase. The compressor has a piston and cylinder (not shown) with a connecting rod 5 the big-end 6 of which is fitted to crankshaft 7. The crankcase has a drive housing 8 into which the driven end 9 of the

- 4 -

crankshaft projects through bearing 4 and has splined to it a cup shaped sun gear member 10 retained by a nut 17 carried by bearing pins such as 11, a plurality of planet gears such as 12 are/provided spaced around and meshing with the sun gear 10 which is aligned with the crankshaft. The planet gear pins 11 are carried by a cage or gear carrier member 23 which is located by and freely running on an internal spigot 19 and a ball bearing 18. Integral with an input drive shaft 21 which runs in a ball bearing 14 carried in an end plate 15 there is an internally geared ring member 20 which is further located coaxially with the crankshaft and sun gear by an inner bearing 16. Engageable with a smooth outer cylindrical surface 24 of 23 there is a means for locking 23 in the housing. This comprises a band brake 22 which is permanently keyed against rotation within the drive housing and is pneumatically operable by means shown in Fig.3.

Referring to Fig. 3, the band 22 of the band-brake is provided at its ends with respective radially outwardly extending ears 51 and 52, ear 52 being pivotably tied by a tie bar 53 to the drive housing 8 and by a further actuating bar 54 to a point on an actuating lever 55. The inner end of the actuating lever is pivotally connected in a recess in a plunger 56. Plunger 56 is slideable in a cylindrical housing 57 and loaded by a captive spring 61 in a direction to cause lever 55 and bar 54 to draw the ears 51 and 52 together. The housing 57 also includes a pneumatically operable actuator piston 58 sealingly slideable

-5-

in the bore 59 and an air pressure input port 60 for receiving an unloader signal.

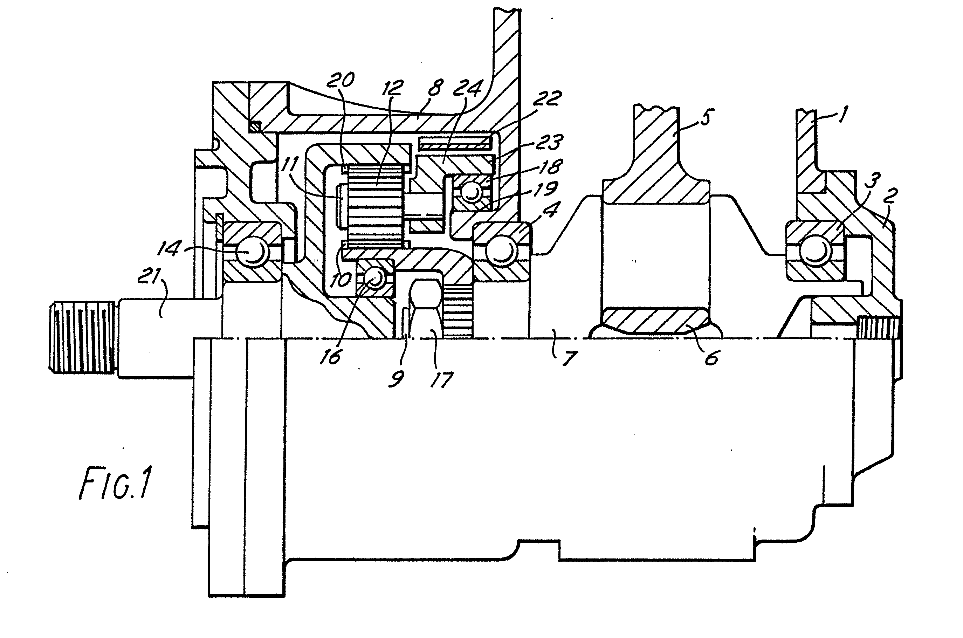

In operation of the compressor assembly of Fig. 1 the input end of shaft 21 is driven by an internal combustion engine of a vehicle. One or more compressed air reservoir which are to be charged by the compressor are connected via check valves or protection valves if required and a condenser or air drier to the output of the compressor in a manner well known in the field of compressed air braking. A governor is provided also of generally known form and which is arranged to provide an unloader signal pressure when the reservoir or each of the reservoirs is charged to a set value of pressure.

Assuming that the pressure in the reservoir or one of the reservoirs is initially below the set value when the vehicle engine is started, the governor provides no input signal to port 60 and the band brake is therefore maintained engaged by the spring 61. The gear carrier member 23 is therefore held stationary so that rotation of the ring gear 20 causes planet gears 12 to drive the sun gear 10 to drive the compressor. Assuming that 'N' gear teeth are provided on gear ring 20 and 'n' gear teeth are provided on sun gear 10 the resultant gear ratio is N:n with the compressor running in the opposite direction to the input shaft 21.

Upon attainment of a predetermining fully charged pressure of the reservoir or reservoirs, the band brake

-6-

22 is released and since 23 is now able freely to rotate in the housing, it and the planet gears run around the sun gear 10 which, therefore, ceases to drive the compressor.

It will be appreciated that the torque required to be exerted by the band brake will depend upon the outer diameter of member 23 in relation to the effective diameter of gear ring 20. The sizes of the sun gear 10 and the ring gear 21 may be varied to achieve a range of output capacities for a given compressor and average engine speed and the member 23 may be provided with alternative bearing pin positions for the purposes of such adaptability in one basic design of assembly.

More than one ratio may be provided in one unit and operated by manual or automatic means to vary the air delivery rate according to demand.

By arranging the input end 9 of the crankshaft and the adjacent end of the input shaft 21 to accept both the sun gear and the ring gear 20 designed as a separable item an epicyclic gear mechanism such as that of Fig. 1 may be assembled in one of two ways to give a device with a step-up gear ratio or a step-down gear ratio but employing the same components.

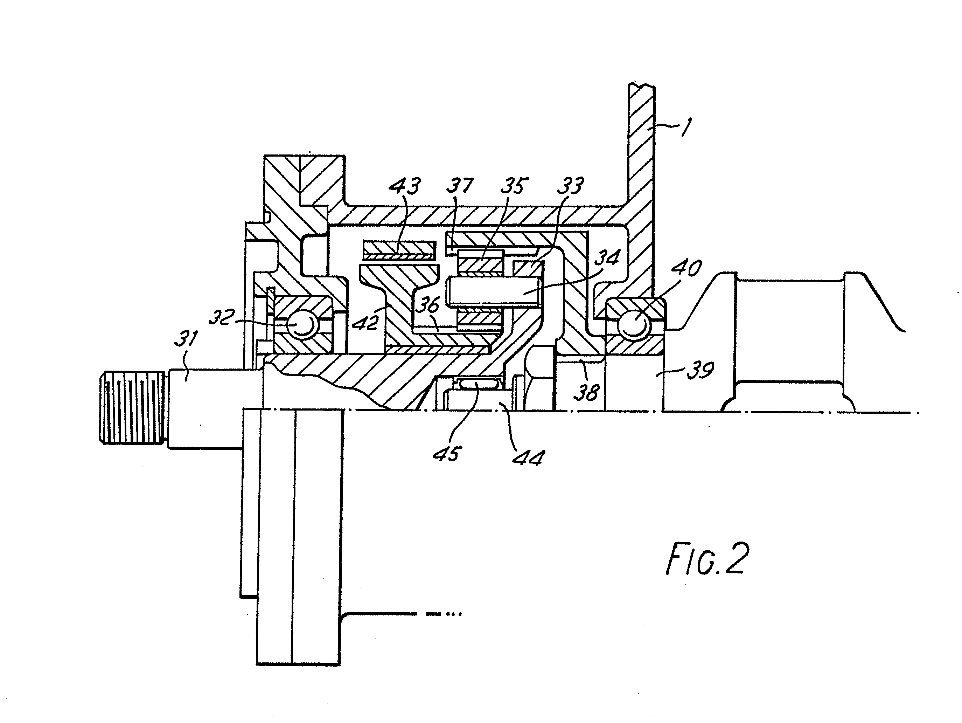

Various alternative arrangements of sun gear planet gear and ring gears of an epicyclic mechanism may be adopted for use in a compressor assembly in accordance with the invention. Referring to Fig. 2, this shows an alternative gear assembly of a piston and cylinder compressor arrangement wherein the sun gear is provided with the band brake, the input shaft being connected to the planet gear carrier and the compressor crankshaft being driven from the outer ring gears.

The input shaft is denoted by reference 31 and is carried in a ball bearing 32, the shaft 31 being integral with a planet gear carrier 33 with bearing pins 34 for planet gear 35 meshing with a sun gear 36, and an outer ring gear 37. The inner end 44 of 31 joins in a needle roller bearing 45 on the end of the crankshaft 39 of the compressor. Ring gear 37 is mounted on a complimentary spline 38 on the drive end of crankshaft 39 which runs in a ball bearing 40 the gear being locked in position by a nut 41. The sun gear 36 is bushed and journalled on the input shaft 31 and provided with an annular brake flange 42 the cylindrical brake surface 43 of which is grippable by a band brake.

The handbrake 43 is constructed and operates/an identical fashion to that described above with reference to Fig.3.

In operation of the compressor assembly of Fig. 2, the input shaft 31 is again driven continuously by the vehicle engine and upon start up with an air reservoir the changed pressure of which is less than the set value of the governor, the governor again produces no unloader signal and the .and brake 43 will be fully

-8-

engaged thereby now retaining the sun gear 36 stationary within the housing. The shaft 31 rotation causes the bearing pins to meshingly carry the planet gear 35 around the stationary sun gear 36. Such motion of the pins is therefore transferred to the surrounding meshing ring gear and added to the resultant gearing action as between the sun gear having no teeth and the ring gear having 'N' teeth. The compressor crankshaft is therefore driven in the same direction as the input shaft 31 with a gearing ratio $1 : 1 + \frac{n}{N}$.

When the pressure in the reservoir being charged by the compressor attains a value set by the system governor an unloader pressure signal is applied to the control piston 58 of the band brake which is thereby released permitting the sun gear 10 to be freely driven by shaft 31 through the action of planet gears in the now stationary ring gear 37. Re-engagement of the band brake enables restarting of the compressor.

Variants and modifications of the compressor assemblies as described in the foregoing with reference to Fig. 1 and Fig. 2 will be possible and apparent to skilled persons. Further the means for effecting locking of an intermediate gear of the locking means may be of a form which is different from that of Fig. 3 if required. For example the locking means may be operated in some applications by an electrical signal.

Claims     -|-

1    A compressor assembly including a housing (1) containing a compressor driveable through a gear train by a rotatable input shaft (21, 31) characterised by said gear train comprising a first gear (20, 34) carried by the drive shaft and being effective to drive the compressor through a third gear (10, 37) by virtue of meshing interaction with an intermediate gear (12, 36) and control means (51 to 61) for locking the intermediate gear in the housing to enable the input shaft (21, 31) to drive the compressor.

2.   A compressor assembly as claimed in claim 1 characterised by the gear train being an epicyclic gear train.

3.   A compressor assembly as claimed in claim 1 characterised by the input shaft carrying a ring gear (20) of the epicyclic gear train.

4.   A compressor assembly as claimed in claim 3 characterised by means (22) for locking a planet gear carrier (23) of the epicyclic gear train.

5)   A compressor assembly as claimed in claim 1 characterised by the input shaft carrying a planet gear carrier (33) of the epicyclic gear train.

6.   A compressor assembly as claimed in claim 5 characterised by means (43) for locking an otherwise freely rotatable sun gear of the epicyclic gear train.

7.  A compressor assembly as claimed in claim 1, 2, 3, 4, 5, or 6, characterised by the locking medium comprising a band brake.

8.  A compressor assembly as claimed in claim 1, 2, 3, 4, 5, 6, or 7 characterised by the locking means being operable by a pneumatically operable actuator such that an applied unloader signal pressure thereto operates to effect unlocking of the locking means.

9.  A compressor assembly as claimed in any preceeding claim characterised in that the mechanism of gear train is such that either end thereof is acceptable to the crankshaft.

10.  A compressor assembly substantially as described herein with reference to Fig. 1 or Fig. 2 of the accompanying drawings.

FIG.1

1/3

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A- 399 936 (AGERON & CIE) * Complete document * | 1-6 | F 04 B 35/00 B 60 T 17/02 |
| Y | US-A-2 963 923 (O.K. KELLEY et al.) * Column 1, lines 1-10; claim 1 * | 1-6 | |
| A | DE-C- 913 945 (DAIMLER-BENZ) * Claim 1; figure * | 1-6 | |
| A | Patent Abstracts of Japan vol. 2, no. 151, 18 December 1978 page 5150M78 & JP-A-53-121329 | 7,8 | |
| A | US-A-2 409 506 (F.R. MacFARLAND) | | TECHNICAL FIELDS SEARCHED (Int. Cl. ³) |
| | | | F 04 B 35/00 F 04 C 29/00 B 60 T 17/00 B 60 K 25/00 F 02 B 67/00 F 16 H 1/00 |

The present search report has been drawn up for all claims

| Place of search | Date of completion of the search | Examiner |
|---|---|---|
| BERLIN | 02-12-1983 | LEMBLE Y.A.F.M. |